# EUROPEAN PATENT SPECIFICATION

(11) **EP 1 063 792 B1**
(45) Date of publication and mention of the grant of the patent: **27.12.2006**
(21) Application number: 00303368.5
(22) Date of filing: 20.04.2000
(51) Int. Cl.: H04B 7/26, H04J 3/06

(54) **Synchronisation system for a dect telecommunications network**
Synchronisationsanordnung für ein DECT-Funkkommunikationsnetzwerk
Système de synchronisation pour réseau de télécommunications DECT

(30) Priority: 14.06.1999 EP 99460040
(43) Date of publication of application: 27.12.2000
(73) Proprietor: TRT Lucent Technologies (SA), 92359 Le Plessis Robinson (FR)
(72) Inventor: Bernadac, Pierre, 22730 Saint Quay Perros (FR)
(74) Representative: Williams, David John

(56) References cited:
- EP-A- 0 803 994
- WO-A-96/38990
- DE-A- 4 333 000
- DE-A- 19 749 665

## Description

The present invention relates to a synchronisation system of radio terminals in a DECT telecommunications network.

The European DECT system of cordless digital telecommunications is at present one of the most used technologies for connecting telephone subscribers. The frequency band used, from 1880 to 1900 MHz, is divided into ten carrier frequencies according to the technique called Frequency Division Multiple Access (FDMA) with a frame structure for each. The frame time division is carried out by a method of Time Division Multiple Access (TDMA). Each frame is divided into 24 time intervals of which 12 serve to transmit from the station to the radio terminal and the other 12 from the radio terminal to the station. This method provides a system capacity of 120 channels, each radio terminal being able to emit on each of these channels and simultaneously on 12 of them. A bi-directional communication only requires two time intervals; the station can then devote the other time intervals to surveillance of the channels available within its range, and at any frequency.

The architecture of a telecommunications network operating with the DECT system is generally as follows: fixed or portable DECT stations communicate by radio link with the radio terminals, which are linked to base stations, which in their turn are connected to the classic telephone network through an autoswitch; each base station is connected to one or several radio terminals each comprising a transceiver. When a plurality of radio terminals is linked to the same base station, one then talks about neighbouring or adjacent radio terminals. The radio terminals are generally linked to their base station by links E1 (or else by links T1). In brief, an E1 link is a digital wire link for the transmission of data at 2Mbps. The E1 link is defined in the G704 standard.

For the network to function well, the radio terminals are synchronised at several levels. First of all the radio terminals are synchronised at the frame level, that is to say they are synchronised so that the DECT frames of the different radio terminals of the network are synchronous. In particular, this makes it possible to detect data conflicts more easily when two radio terminals are emitting on the same radio channel. This synchronisation is called frame synchronisation.

The network's neighbouring radio terminals are also synchronised at the level of the DECT multi-frame. One should note that a DECT multi-frame is composed of 16 DECT frames and that each DECT frame holds different signalling information destined for the stations, meaning that the frame of array n in a DECT multi-frame does not contain the same signalling information as the frame of array n+1. On the other hand, this frame of array n contains the same signalling information as a frame of rank n in a DECT multi-frame of a neighbouring radio terminal. Thus, if the network's radio terminals are synchronised at the multi-frame level, this makes it possible to ensure a continuity in the signalling information received by a station when the latter changes radio terminal and switches from a radio terminal B1 to a neighbouring radio terminal B2. Before the switchover, the station communicates with radio terminal B1 through the intermediary of the frame of array n of the multi-frame related to the radio terminal B1 and, after switching, it communicates with the radio terminal B2 through the intermediary of the frame of array n+1 related to the radio terminal B2. This synchronisation is called multi-frame synchronisation.

Following the same principle, neighbouring radio terminals in a DECT network are also synchronised at the level of the DECT multi-frame number. In fact, each DECT multi-frame possesses a number corresponding to its array in a block of 2²⁴ multi-frames. This coded number on 24 bits is used in particular to cipher communications if necessary. The neighbouring radio terminals of the network are synchronised at this level so that, when a station switches from one radio terminal to another neighbouring radio terminal, the multi-frames emitted by these two radio terminals have the same number. The new radio terminal is then able to continue the ciphering begun by the first radio terminal. This synchronisation is called number of multi-frame synchronisation.

In addition, the neighbouring radio terminals of the network are synchronised at the level of the reception carrier frequencies. In fact each base station is permanently diffusing information destined for all the stations indicating the reception frequency of its radio terminals for the DECT frame to follow. Thus a terminal seeking to emit to the base station can know the carrier frequency to use to communicate with it at the time of the next DECT frame. This information is generally indicated by the term Primary Scanning Carrier Number (PSCN). The reception carrier frequency changes in a periodic fashion at each DECT frame: f0, f1 up to f9 and then again f0, etc. The neighbouring radio terminals are thus synchronised to have the same reception carrier frequency at every moment. This synchronisation is called reception carrier synchronisation or, in technical language, scanning radio synchronisation.

In order to operate these four levels of synchronisation, one generally envisages a synchronisation source for each group of neighbouring radio terminals. This source is linked to the neighbouring radio terminals through the intermediary of a series link of the RS422 type. This source is in charge of delivering synchronisation pulses, for example every 100ms to synchronise the carrier frequency, every 160ms to synchronise the multi-frame and every 2²⁴ x 160ms to synchronise the multi-frame number.

Even though simple to operate, this solution is nonetheless inconvenient in that it requires a great number of cables to link the group of neighbouring radio terminals to the synchronisation source.

One aim of the invention is to provide a synchronisation system for radio terminals which makes it possible to reduce significantly the number of cables necessary for connection to the source.

In order to do this, according to the invention one envisages connecting the synchronisation source to the base station, to synchronise the frames exchanged over the links E1 or T1 with the aid of this source, and to introduce data into these frames so as to synchronise the radio terminals between themselves.

It is known from German published patent application DE-A-4333000 to provide a synchronisation system comprising multiple radio terminals in a DECT telecommunications network comprising a plurality of base stations, each base station being connected to a set of neighbouring radio terminals by E1 or T1 links respectively, each radio terminal also being connected to multiple DECT radio stations by a DECT radio link, in use the data exchanged over the E1 or T1 links being arranged in first type time frames and the data exchanged over the DECT radio links being arranged in second type time frames,
in which in use the first type time frames are transmitted in a synchronised manner between the base stations assembly and the radio terminals assembly, and in such a way that the first type time frames carry synchronisation data to ensure synchronisation of the second type time frames.

The present invention is characterised over the disclosure of DE-A-4333000 in that the first type time frames carry a second type multi-frame number.

Advantageously, I the first type time frames also carry synchronisation data to ensure synchronisation of the second type multi-frames of radio terminals of a same group, and data to ensure the synchronisation of reception carriers of second type time frames,

This solution only requires one cable per group of neighbouring radio terminals since the synchronisation source is connected uniquely to the base station, which transmits the synchronisation to the radio terminals across link E1 (or T1)

Other characteristics and advantages of the invention will appear by reading the detailed description which follows and which is written with reference to the appended drawings, among which:
Figure 1 represents a diagram of a telecommunications network capable of operating with the synchronisation system of the invention;
Figure 2 represents a more detailed diagram of the means necessary for operating the invention.

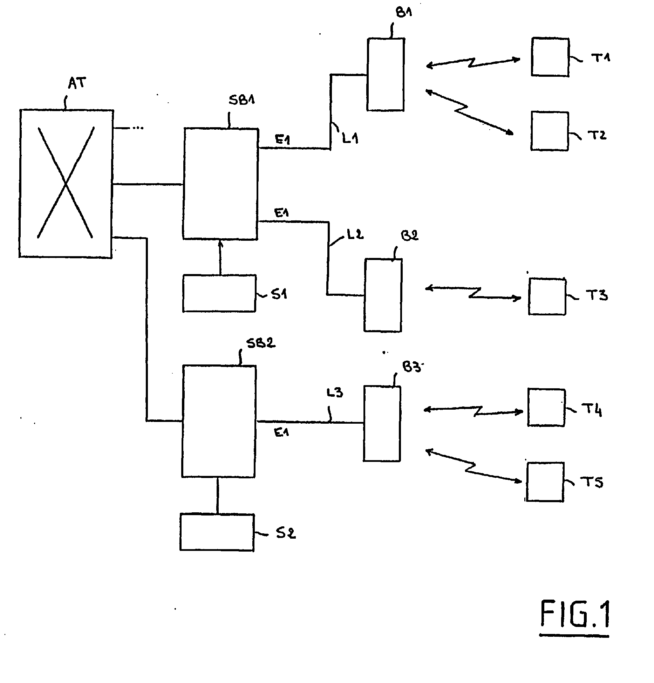

The DECT telecommunications network illustrated in Figure 1 comprises an autoswitch AT linked on the one hand with the classic telephone network and on the other hand with a plurality of base stations, SB1 and SB2. These base stations are linked to the autoswitch AT by wire links. The base station SB1 is connected to two neighbouring radio terminals, B1 and B2, through the intermediary of two links of the E1 type, L1 and L2 respectively. On the other hand, the base station SB2 is connected through the intermediary of an L3 link of type E1 to a base station SB3. Portable or fixed stations, T1, T2, T3, T4 and T5 are in radio link with the radio terminals B1, B2 and B3. Evidently one could envisage using T1 links instead of type E1 links.

According to the invention, the frames exchanged over the L1, L2 and L3 links are first of all synchronised on a synchronisation source S1. In an E1 link, these frames have a length of 125µs and each carries 32 time intervals. The frames are called first type frames in the following description. Referring to Figure 1, the first type frames exchanged over the L1 and L2 links are synchronised by the S1 synchronisation source connected to the base station SB1 and the first type frames exchanged over link L3 are synchronised by an S2 synchronisation source. An identical source is envisaged for each base station of the network. This source is typically a GPS (Global Positioning System) receiver in charge of delivering synchronisation pulses.

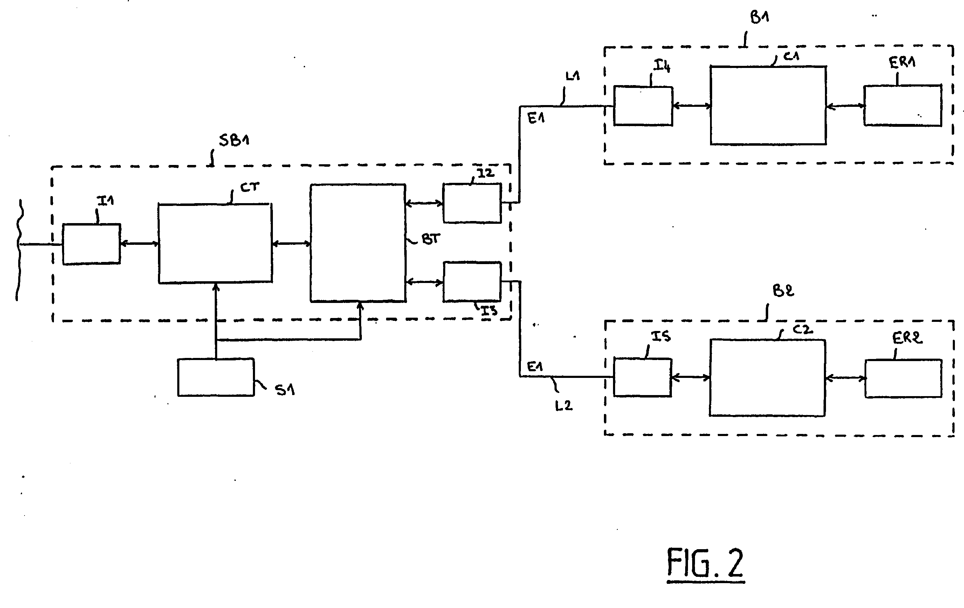

Moreover, according to the invention, the synchronisation data are also introduced into the first type frames. These data are destined for the network radio terminals and will make it possible to synchronise the DECT frames of the network radio links. The DECT frames in the description below are called second type frames. The synchronisation system of the invention is illustrated in more detailed fashion in Figure 2.

Figure 2 represents a detailed diagram of the base station SB1 and the neighbouring radio terminals B1 and B2 from Figure 1. The SB1 base station comprises a first interface I1 to communicate through an E1 link with the autoswitch AT. Moreover, a buffer circuit CT is provided to act as a frontier between the part of the base station which is synchronised on the autoswitch and the part of the base station which is synchronised on the S1 synchronisation source. Evidently, the synchronisation source S1 is connected to this buffer circuit. The first type frames from this CT buffer circuit on the station side are then treated by a processing block BT in charge of introducing synchronisation data into these frames. The data introduced into these frames are intended to inform the terminals B1 and B2 of the beginning of a second type frame, the second type multi-frame number and the second type frame having for carrier reception frequency the frequency f0. The block BT is also in charge, in the emission upload connection, of generating first type time frames destined for the radio terminals B1 and B2 from the frames from the buffer circuit CT and, in the download connection, of generating a unique frame from those of the first type coming from the radio terminals B1 and B2. It should be noted that, in the case of the base station SB2, it is not necessary to transmit any data other than data indicating the beginning of the second type frames since the radio terminal B3 attached to this base station does not possess any neighbouring radio terminal.

For example, the synchronisation data are introduced in the last time interval of first type frames. In this time interval one envisages reserving, for example:
- a field of 2 bits for synchronisation of the second type frames,
- a field of 2 bits for synchronisation of the second type multi-frames,
- a field of 2 bits for the synchronisation of the reception carrier, and
- a field of 2 bits for the synchronisation of the multi-frame number.

If one considers that a second type frame (10ms) corresponds to a length of time of 80 first type frames (125µs), it is sufficient to send one information, for example the binary datum 10, every first type 80 frames to inform the radio terminal that the beginning of the next first type frame corresponds to the beginning of a second type frame. In practice, the processing block BT introduces a datum into each first type frame, the value of this datum varying with the approach of the beginning of the second type frame. For example, block BT introduces the datum 10 into the three first type frames preceding the beginning of the second type frame and the datum 01 in the 77 other frames.

According to the same principle, every 1280 (80*16) first type frames it is necessary to send the radio terminal information informing it of the beginning of a second type multi-frame. In order to do this, the processing block BT introduces the datum 10 into the first type frame preceding the beginning of a second type multi-frame and the datum 01 into the 1279 other first type frames.

For synchronisation of the reception carrier, it is necessary to send information every 800 (80*10) first type frames indicating the carrier frequency f0. To this effect, the block BT therefore introduces the datum 10 into the first type frame preceding the second type frame with a reception carrier frequency of frequency f0 and the datum 01 into the 799 other first type frames.

Finally, for synchronisation of the multi-frame number, one has 1280 (16*80) first type frames for transmitting the 24 bits of the number. In practice, the block BT introduces the 2 high-order bits of the multi-frame number into the 80 first type frames corresponding to the first second type frame, the 2 bits following the number into the 80 first type frames corresponding to the second second type frame, and so on for the 12*80 first first type frames. Data for verification or correcting errors are also introduced into the 4*80 first type frames remaining.

The first type frames thus modified are transmitted to the radio terminals B1 and B2 by links L1 and L2. At their extremities, the links L1 and L2 are provided with appropriate interfaces for carrying first type frames, I2, I4 respectively for L1 and I3, I5 for L2. It should be noted that one envisages suppressing or short-circuiting the jitter filters present at the extremities of the link in the interfaces. In fact it is a matter of respecting the standard EN 300 175-3 appendix E which states that the second type frame emitted by a radio terminal must begin 15µs ± 2µs after the frame synchronisation pulse corresponding to a beginning of a second type frame, the said impulse being provided by the corresponding synchronisation source S1 or S2.

In the radio terminals B1 and B2, the first type frames are processed by processing blocks C1 and C2, respectively. These blocks are simultaneously in charge of:
- extracting the synchronisation data from the first type frames,
- transmitting these synchronisation data to the transceivers, ER1 and ER2 respectively, I in order to synchronise the second type frames which they emit, and
- as upload connection, converting the first type frames from the I4 or I5 interface into second type frames, and, as download connection, converting the second type frames into first type frames.

## Claims

1. A synchronisation system comprising multiple radio terminals (B1,B2,B3) in a DECT telecommunications network comprising a plurality of base stations (SB1,SB2), each base station being connected to a set of neighbouring radio terminals by E1 or T1 links respectively (L1,L2, L3), each radio terminal also being connected to multiple DECT radio stations (T1,T2, T3, T4, T5) by a DECT radio link, in use the data exchanged over the E1 or T1 (L1,L2, L3) links being arranged in first type time frames and the data exchanged over the DECT radio links being arranged in second type time frames,
in which in use the first type time frames are transmitted in a synchronised manner between the base stations assembly and the radio terminals assembly, and in such a way that the first type time frames carry synchronisation data to ensure synchronisation of the second type time frames, **characterised in that** the first type time frames carry a second type multi-frame number.

2. A synchronisation system according to claim 1, **characterised in that** the first type time frames carry synchronisation data to ensure the synchronisation of second type multi-frames between the radio terminals of a same group.

3. A synchronisation system according to claim 1 or claim 2, **characterised in that** the first type time frames carry synchronisation data to ensure synchronisation of the reception carrier frequencies of the second type time frames for the radio terminals of a same group.

4. A synchronisation system according to any one of the preceding claims, **characterised in that** a field of two bits is allotted in each first type frame to carry each of the synchronisation data.

5. A method of transmission of data in a synchronisation system comprising multiple radio terminals (B1, B2, B3) in a DECT telecommunications network comprising a plurality of base stations (SB1, SB2), each base station being connected to a set of neighbouring radio terminals by Eel or T1 links respectively (L1, L2, L3), each radio terminal also being connected to multiple DECT radio stations (T1, T2, T3, T4, T5) by a DECT radio link, in use the data exchanged over the E1 or T1 (L1, L2, L3) links being arranged in first type time frames and the data exchanged over the DECT radio links being arranged in second type time frames,
in which in use the first type time frames are transmitted in a synchronised manner between the base stations assembly and the radio terminals assembly, and in such a way that the first type time frames carry synchronisation data to ensure synchronisation of the second type time frames, **characterised in that** the first type time fi-ames carry a second type multi-frame number.

6. A method according to claim 5, **characterised in that** the first type time frames carry synchronisation data to ensure the synchronisation of second type multi-frames between the radio terminals of a same group.

7. A synchronisation system according to claim 5 or claim 6, **characterised in that** the first type time frames carry synchronisation data to ensure synchronisation of the reception carrier frequencies of the second type time frames for the radio terminals of a same group.

8. A synchronisation system according to any one of claims 5 to 7, **characterised in that** a field of two bits is allotted in each first type frame to carry each of the synchronisation data.

## Patentansprüche

1. Synchronisationssystem mit mehreren Funkendgeräten (B1, B2, B3) in einem DECT-Telekommunikationsnetz mit einer Mehrzahl von Basisstationen (SB1, SB2), wobei jede Basisstation mit einer Menge von Nachbar-Funkendgeräten durch E1- bzw. T1-Strecken (L1, L2, L3) verbunden ist, wobei jedes Funkendgerät auch mit mehreren DECT-Funkstationen (T1, T2, T3, T4, T5) durch eine DECT-Funkstrecke verbunden ist, wobei im Gebrauch die über die E1-oder T1-Strecken (L1, L2, L3) ausgetauschten Daten im Zeitrahmen einer ersten Art angeordnet sind und die über die DECT-Funkstrecken ausgetauschten Daten in Zeitrahmen in einer zweiten Art angeordnet sind,
wobei im Gebrauch die Zeitrahmen der ersten Art synchronisiert zwischen der Gruppe von Basisstationen und der Gruppe von Funkendgeräten übertragen werden, derart, daß die Zeitrahmen der ersten Art Synchronisationsdaten führen, um Synchronisation der Zeitrahmen der zweiten Art sicherzustellen, **dadurch gekennzeichnet, daß** die Zeitrahmen der ersten Art eine Mehrfachrahmennummer der zweiten Art führen.

2. Synchronisationssystem nach Anspruch 1, **dadurch gekennzeichnet, daß** die Zeitrahmen der ersten Art Synchronisationsdaten führen, um die Synchronisation der Mehrfachrahmen der zweiten Art zwischen den Funkendgeräten einer gleichen Gruppe sicherzustellen.

3. Synchronisationssystem nach Anspruch 1 oder Anspruch 2, **dadurch gekennzeichnet, daß** die Zeitrahmen der ersten Art Synchronisationsdaten führen, um Synchronisation der Empfangsträgerfrequenzen der Zeitrahmen der zweiten Art für die Funkendgeräte einer gleichen Gruppe sicherzustellen.

4. Synchronisationssystem nach einem beliebigen der vorhergehenden Ansprüche, **dadurch gekennzeichnet, daß** in jedem Zeitrahmen der ersten Art ein Feld von zwei Bit zugeteilt ist, um die jeweiligen Synchronisationsdaten zu führen.

5. Verfahren zur Übertragung von Daten in einem Synchronisationssystem mit mehreren Funkendgeräten (B1, B2, B3) in einem DECT-Telekommunikationsnetz mit einer Mehrzahl von Basisstationen (SB1, SB2), wobei jede Basisstation mit einer Menge von Nachbar-Funkendgeräten durch E1- bzw. T1-Strecken (L1, L2, L3) verbunden ist, wobei jedes Funkendgerät auch mit mehreren DECT-Funkstationen (T1, T2, T3, T4, T5) durch eine DECT-Funkstrecke verbunden ist, wobei im Gebrauch die über die E1-oder T1-Strecken (L1, L2, L3) ausgetauschten Daten im Zeitrahmen der ersten Art angeordnet sind und die über die DECT-Funkstrecken ausgetauschten Daten in Zeitrahmen der zweiten Art angeordnet sind,
wobei im Gebrauch die Zeitrahmen der ersten Art synchronisiert zwischen der Gruppe von Basisstationen und der Gruppe von Funkendgeräten übertragen werden, derart, daß die Zeitrahmen der ersten Art Synchronisationsdaten führen, um Synchronisation der Zeitrahmen der zweiten Art sicherzustellen, **dadurch gekennzeichnet, daß** die Zeitrahmen der ersten Art eine Mehrfachrahmennummer der zweiten Art führen.

6. Verfahren nach Anspruch 5, **dadurch gekennzeichnet, daß** die Zeitrahmen der ersten Art Synchronisationsdaten führen, um die Synchronisation der Mehrfachrahmen der zweiten Art zwischen den Funkendgeräten einer gleichen Gruppe sicherzustellen.

7. Synchronisationssystem nach Anspruch 5 oder Anspruch 6, **dadurch gekennzeichnet, daß** die Zeitrahmen der ersten Art Synchronisationsdaten führen, um Synchronisation der Empfangsträgerfrequenzen der Zeitrahmen der zweiten Art für die Funkendgeräte einer gleichen Gruppe sicherzustellen.

8. Synchronisationssystem nach einem beliebigen der Ansprüche 5 bis 7, **dadurch gekennzeichnet, daß** in jedem Zeitrahmen der ersten Art ein Feld von zwei Bit zugeteilt ist, um die jeweiligen Synchronisationsdaten zu führen.

## Revendications

1. Système de synchronisation comprenant de multiples terminaux radio (B1, B2, B3) dans un réseau de télécommunications DECT comprenant une pluralité de stations de base (SB1, SB2), chaque station de base étant connectée à un ensemble de terminaux radio voisins par des liaisons E1 ou T1 respectivement (L1, L2, L3), chaque terminal radio étant aussi connecté à de multiples stations radio DECT (T1, T2, T3, T4, T5) par une liaison radio DECT, durant l'utilisation les données échangées sur les liaisons E1 ou T1 (L1, L2, L3) étant agencées dans des trames de temps d'un premier type et les données échangées sur les liaisons radio DECT étant agencées dans des trames de temps d'un second type,
dans lequel durant l'utilisation les trames de temps d'un premier type sont transmises de manière synchronisée entre l'ensemble de stations de base et l'ensemble de terminaux radio, et de telle façon que les trames de temps du premier type acheminent des données de synchronisation afin d'assurer la synchronisation des trames de temps du second type, **caractérisé en ce que** les trames de temps du premier type acheminent un nombre de multitrames du second type.

2. Système de synchronisation selon la revendication 1, **caractérisé en ce que** les trames de temps du premier type acheminent des données de synchronisation afin d'assurer la synchronisation des multitrames du second type entre les terminaux radio d'un même groupe.

3. Système de synchronisation selon la revendication 1 ou 2, **caractérisé en ce que** les trames de temps du premier type acheminent des données de synchronisation afin d'assurer la synchronisation des fréquences porteuses de réception des trames de temps du second type pour les terminaux radio d'un même groupe.

4. Système de synchronisation selon l'une quelconque des revendications précédentes, **caractérisé en ce qu'**un champ de deux bits est alloué dans chaque trame du premier type pour acheminer chacune des données de synchronisation.

5. Procédé de transmission de données dans un système de synchronisation comprenant de multiples terminaux radio (B1, B2, B3) dans un réseau de télécommunications DECT comprenant une pluralité de stations de base (SB1, SB2), chaque station de base étant connectée à un ensemble de terminaux radio voisins par des liaisons E1 ou T1 respectivement (L1, L2, L3), chaque terminal radio étant aussi connecté à de multiples stations radio DECT (T1, T2, T3, T4, T5) par une liaison radio DECT, durant l'utilisation les données échangées sur les liaisons E1 ou T1 (L1, L2, L3) étant agencées dans des trames de temps d'un premier type et les données échangées sur les liaisons radio DECT étant agencées dans des trames de temps d'un second type,
dans lequel durant l'utilisation les trames de temps du premier type sont transmises de manière synchronisée entre l'ensemble de stations de base et l'ensemble de terminaux radio, et de telle façon que les trames de temps du premier type acheminent des données de synchronisation afin d'assurer la synchronisation des trames de temps du second type, **caractérisé en ce que** les trames de temps du premier type acheminent un nombre de multitrames du second type.

6. Procédé selon la revendication 5, **caractérisé en ce que** les trames de temps du premier type acheminent des données de synchronisation afin d'assurer la synchronisation de multitrames du second type entre les terminaux radio d'un même groupe.

7. Système de synchronisation selon la revendication 5 ou 6, **caractérisé en ce que** les trames de temps du premier type acheminent des données de synchronisation afin d'assurer la synchronisation des fréquences porteuses de réception des trames de temps du second type pour les terminaux radio d'un même groupe. '

8. Système de synchronisation selon l'une quelconque des revendications 5 à 7, **caractérisé en ce qu'**un champ de deux bits est alloué dans chaque trame du premier type pour acheminer chacune des données de synchronisation.
